(19) Europäisches Patentamt
European Patent Office
Office européen des brevets

(11) **EP 2 902 924 A1**

(12) **EUROPEAN PATENT APPLICATION**

(43) Date of publication:
05.08.2015 Bulletin 2015/32

(51) Int Cl.:
***G06F 17/30*** *(2006.01)*

(21) Application number: **14153338.0**

(22) Date of filing: **30.01.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
• **Gaste, Yann**
  **91620 Nozay (FR)**
• **Picault, Jerome**
  **91620 Nozay (FR)**

(74) Representative: **Novagraaf Technologies**
**Bâtiment O2**
**2, rue Sarah Bernhardt**
**CS90017**
**92665 Asnières-sur-Seine Cedex (FR)**

(54) **Method for automatically selecting a real-time video stream among a plurality of available real-time video streams, and associated system**

(57)    A method is intended for automatically selecting a real-time video stream among a plurality of available real-time video streams ($2_j$, $2_k$). The method comprises:
• a first step (30) of selection of a set (18) of relevant video streams from an initial set of available real-time video streams ($2_j$, $2_k$), said relevant video streams being related to a single event,
• a step (32) of determination of an ordered subset (34) of relevant video streams from the received set (18) of relevant video streams, said determination being based on a received set of social interaction data ($10_i$) associated to each of said relevant video streams, and
• a second step (68) of selection of a single relevant video stream from the received subset (34) of relevant video streams.

Fig. 2

EP 2 902 924 A1

## Description

## Field of the Invention

The present invention relates to real-time video stream selection equipments, and more precisely to equipments allowing selection of real-time video streams related to a single event, especially a public event.

## Background

In the context of a big public event, such as a sport competition, a big concert, a political event, etc. there are more and more multimedia sources available, either managed by a single broadcaster or a single producer, or generated by a set of users. For example, some video television channels already make publicly available different video streams related to a given event. Such video streams come from various cameras located in different physical places, all the cameras capturing the particular event from various points of view. As another example, some electronic platforms exist that allow users equipped with mobile devices to upload their own video streams captured with such mobile devices.

However once multiple video streams are available comes the problem of stream selection. More precisely, it becomes increasingly complex for a single user to select in real time the video stream which is, according to his interests, the most relevant to represent the current situation. Furthermore, such a user has no guarantee that he has not missed an important part of the event that occurred while he was watching another stream.

Some solutions exist for helping a user to select in real time the video stream which is the most relevant to represent the current situation.

For instance, some video stream selection equipments have been proposed that select a real-time video stream among a plurality of available real-time video streams based on hardware and network criteria such as selection of an optimal bandwidth using a set of video parameters, availability of network resources, and/or availability of user terminal resources. Such solutions help a user to dynamically switch between the different available video streams, but do not help him to select the video stream that best suits his personal need / interests.

Other systems, that automatically select a real-time video stream among a plurality of available real-time video streams displaying various events, have also been proposed. Some of these systems exploit metadata associated to the video streams for selecting one particular video stream. More precisely, such systems generate automatically, for each video stream, indexing data of at least one predetermined attribute corresponding to a desired program content, such as a program title or the occurrence of any event within a program; and identifies, from the generated indexing data, any video stream having a match with respect to the specified attribute. However, such systems are not appropriate when it comes to selection of a video stream among multiple video streams related to a same given event. Indeed, the use of metadata such as the program title or channel is then worthless and this leads to an imprecise distinction between the video streams.

## Summary

So an object of this invention is to provide an automatic service for selecting a real-time video stream among a plurality of available real-time video streams related to a single event, that allows a user to select in real time the video stream that best suits his personal need and/or interests, while ensuring that he has not missed an important part of the event that occurred while he was watching another stream.

In a first embodiment, a method is intended for automatically selecting a real-time video stream among a plurality of available real-time video streams, the method comprising:

- a first step of selection of a set of relevant video streams from an initial set of available real-time video streams, said relevant video streams being related to a single event,
- a step of determination of an ordered subset of relevant video streams from the received set of relevant video streams, said determination being based on a received set of social interaction data associated to each of said relevant video streams, and
- a second step of selection of a single relevant video stream from the received subset of relevant video streams.

Advantageously, thanks to the step of determination of an ordered subset of relevant video streams based on a received set of social interaction data associated to each of said relevant video streams, the method provides a simple and efficient solution to a user for selecting in real time a video stream that best suits his personal need and/or interests, while ensuring that he has not missed an important part of the event that occurred while he was watching another stream.

The method may include additional characteristics considered separately or combined, and notably:

- the first selection is carried out based on received data describing the single event and on received data describing the available real-time video streams, the first selection step comprising, for each of the available real-time video streams, a comparison between keywords extracted from said received data describing the single event and keywords extracted from the received data describing said available real-time video stream;
- the first selection step comprises, for each of the available real-time video streams, a check of said available real-time video stream against predetermined quality rules;

- the determination step comprises:

    - a computation of a time interval value,
    - a computation of a time window value, said time window value being less than or equal to the time interval value,
    - and for each time interval :

        ○ a cutting of each received relevant video stream into a plurality of video stream segments, each video stream segment having a duration equal to the time window value,
        ○ for each of the video stream segments, a determination of a set of topics, said topics being related to the social interaction data associated to said video stream segment,
        ○ a determination of a level of content similarity between said video stream segments and a current broadcast video stream,
        ○ a classification of said video stream segments according to their level of content similarity with the current broadcast video stream, said classified video stream segments forming the ordered subset of relevant video streams;

- the determination of a set of topics for each of the video stream segments comprises:

    - an extraction of keywords from the social interaction data associated to the corresponding video stream segment,
    - for each extracted keyword, a computation of a weight,
    - an association of each computed weight to its corresponding keyword, and
    - an implementation of a predetermined topic model algorithm on said extracted keywords and on their respective weights;

- the determination of a level of content similarity between the video stream segments and a current broadcast video stream comprises:

    - a classification of the video stream segments into a distribution of probabilities over said sets of topics, and
    - the a computation of a similarity metric on said distribution of probabilities and on the current broadcast video stream;

- the method further comprises a step of computation, for each of the video stream segments, of a pattern of evolution of the social interaction data associated to said video stream segment, said pattern of evolution being determined via a comparison between a representative function of the number of social interaction data associated to said relevant video stream segment over time, and predetermined evolution patterns;

- the second selection step comprises an emission of a recommendation signal of switching to a real-time video stream, said recommendation being based on:

    - a pre-selection of video streams among the received subset of relevant video streams, said-pre-selection depending on a predetermined user parameter as to content similarity, and
    - an implementation of a decision matrix, said decision matrix having as inputs said predetermined user parameter as to content similarity and the result of said computation of video stream segment patterns, said decision matrix having at least two final decision outputs, one of said decision outputs corresponding to the emission of the recommendation signal of switching to one video stream among said pre-selected relevant video streams, said recommended video stream then forming the selected video stream;

- the decision matrix has three final decision outputs, another of said decision outputs corresponding to the emission of a recommendation signal of switching to an instant replay of one video stream among said pre-selected relevant video streams, said video stream then forming the selected video stream;
- the real-time video streams are either video streams provided by video television channels or are user-generated video streams.

In a second embodiment, a computer program product comprises a set of instructions arranged, when it is executed by processing means, for performing the method such as the one above introduced to allow selecting automatically a real-time video stream among a plurality of available real-time video streams.

In a third embodiment, a method for performing a communication protocol comprises a submethod for automatically selecting a real-time video stream among a plurality of available real-time video streams such as the one above introduced, said method further comprises at least one step among:

- a step of receiving a plurality of available real-time video streams from at least one source providing real-time video streams,
- a step of receiving social interaction data from at least one source providing social interaction data associated to real-time video streams,
- a step of transmitting to a display device a recommendation signal of switching to the selected relevant video stream.

In a fourth embodiment, a system for automatically selecting a real-time video stream among a plurality of available real-time video streams comprises:

- means for selecting a set of relevant video streams among a set of available real-time video streams, said relevant video streams being related to a single event,
- stream-relating social analysing means connected to the selecting means, said analysing means being adapted to receive a set of social interaction data associated to each of said relevant video streams, and being arranged, when it receives said set of relevant video streams, for determining an ordered subset of relevant video streams based on said set of social interaction data,
- final selecting means connected to the analysing means, said final selecting means being adapted to select a single relevant video stream from the received subset of relevant video streams.

**Brief Description of the Figures**

Some embodiments of apparatus and/or methods in accordance with embodiments of the present invention are now described, by way of example only, and with reference to the accompanying drawings, in which :

- The Figure 1 schematically illustrates a communication network for providing and displaying a real-time video stream, to which is connected a system for automatically selecting the real-time video stream according to an embodiment of the invention,
- The Figure 2 schematically and functionally illustrates the system of Figure 1, implementing the method for automatically selecting a real-time video stream according to an embodiment of the invention,
- The Figure 3 schematically illustrates a particular step of the method for automatically selecting a real-time video stream according to an embodiment of the invention, and
- The Figures 4 to 6 are evolution diagrams each representing a number of social interaction data associated to a relevant video stream segment over time.

**Description of Embodiments**

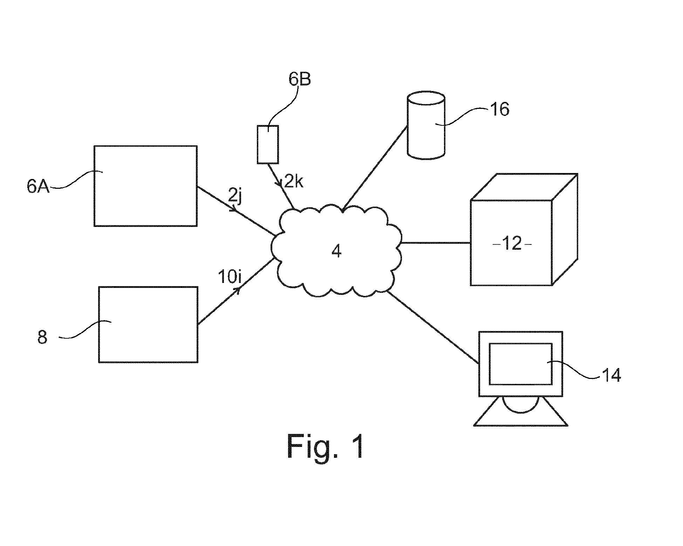

Hereafter is notably disclosed a method intended for automatically selecting a real-time video stream among several available real-time video streams $2_j$, $2_k$.
In the following description, the term "topic" means a semantic description of a video stream segment.
A communication network 4 for providing and displaying a real-time video stream $2_j$, $2_k$ is schematically illustrated in Figure 1. At least one source 6A, 6B providing real-time video streams $2_j$, $2_k$ and at least one source 8 providing social interaction data $10_i$ associated to real-time video streams $2_j$, $2_k$ are connected to the communication network 4. A system 12 for automatically selecting a real-time video stream among available real-time video streams $2_j$, $2_k$ is also connected to the communication network 4. Preferably, at least one display device 14 and at least one database 16 may further be connected to the communication network 4.
In the exemplary embodiment of Figure 1, two sources 6A, 6B providing real-time video streams $2_j$, $2_k$, one source 8 providing social interaction data $10_i$, one display device 14 and one database 16 are connected to the communication network 4.
The communication network 4 comprises a wireless communication infrastructure, allowing connection of wireless communication equipments 6B of users, and a wired communication infrastructure (preferably with Internet access), allowing connection of, or access to, network equipments such as servers and databases. In a particular embodiment the communication network 4 is designed as a cloud computing network type.
In Figure 1, a first source 6A providing real-time video streams is intended to provide streams $2_j$ from video television channels, and a second source 6B is intended to provide real time user-generated video streams $2_k$. The real-time video streams $2_j$, $2_k$ provided by the sources 6A, 6B are for example uploaded via the communication network 4 on a streaming platform, which is not illustrated on the Figures for clarity. Preferably, data describing the content of real-time video streams is associated to each real-time video stream $2_j$, $2_k$. Such data is for example a speech transcript of the video stream, if such a speech transcript makes sense regarding the content of the video stream.
The first source 6A is for example formed by a set of several cameras from a same video channel. Alternatively, the first source 6A is formed by a set of several cameras from different video channels.
The second source 6B is a wireless communication equipment. In the following description it will be considered that the second source 6B is a smartphone. But this is not limited to this kind of wireless communication equipment. Indeed, it concerns any type of wireless communication equipment capable of establishing communications with network equipments via at least one communication network, and notably tablets, laptops, mobile wearable connected webcams or Internet Protocol cameras for instance. The smartphone 6B provides real time video streams $2_k$ created by a user who is using a video capture functionality of his smartphone.
The source 8 providing social interaction data $10_i$ is for example a server. Once real-time video streams $2_j$, $2_k$ are available on the streaming platform, users are able to use the server 8 so as to post social interaction data $10_i$, such as textual comments for example. The social interaction data $10_i$ are associated to the real-time video streams $2_j$, $2_k$ in the server 8 via specific metadata, thereby forming a set of social interaction data $10_i$ provided by the server 8. In a particular embodiment the server 8 is a micro blogging service server, such as for example a micro blogging service server provided by Twitter® (Twitter is as trademark of the company Twitter Inc.), and the metadata which allows linking the social interaction data $10_i$ to the real-time video streams $2_j$, $2_k$ are specific hashtags. According to this particular embodiment, the association between the social interaction data $10_i$ and the real-time video streams $2_j$, $2_k$ is done manually. Alternatively, this association is done automatically.

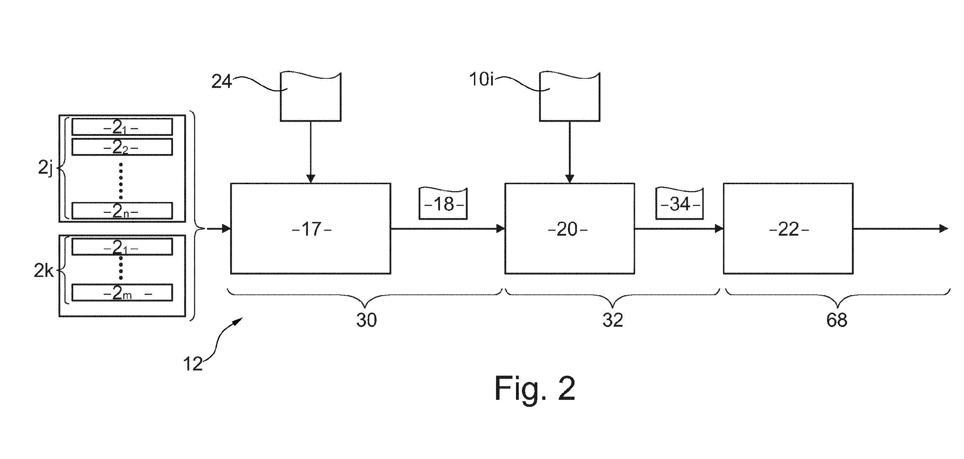

In reference to Figure 2, the system 12 comprises means 17 for selecting a set 18 of relevant video streams among the available real-time video streams $2_j$, $2_k$, stream-relating social analyzing means 20 connected to the selecting means 17, and final selecting means 22 connected to the social analyzing means 20.

In a particular embodiment, the selecting means 17, the stream-relating social analyzing means 20 and the final selecting means 22 are functional components combined into a single server, arranged within the system 12. Alternatively, the selecting means 17, the stream-relating social analyzing means 20 and the final selecting means 22 are functional components distributed variably between several servers based on considerations such as load, system security, etc.. These distributing operations fall within the ordinary skills of system architects and engineers in charge of computer systems. Likewise, these components may be duplicated.

The display device 14 comprises for example a television screen or a or a tablet screen or a computer screen, preferably connected to a computation unit which is not illustrated on the Figures for clarity.

The database 16 is adapted to store data 24 describing particular events. In particular embodiments, data 24 describing a particular event are textual descriptions through television program guide, or a set of keywords related to the particular event or a set of hashtags related to the event and for example provided by the organizers of the event.

In a prior step, the selecting means 17 receive the available real-time video streams $2_j$, $2_k$ from the sources 6A, 6B via the communication network 4.

As mentioned above, the method is intended for automatically selecting a real-time video stream among the available real-time video streams $2_j$, $2_k$. The method is described with reference to Figure 2.

This method is implemented in loop each time that a user wants to watch a video programme via several different video streams related to a single event. In the following description, it is considered that the user is currently watching a particular video stream related to a particular event.

The method comprises a first step 30 during which the selecting means 17 select a set 18 of relevant video streams among the available real-time video streams $2_j$, $2_k$. The relevant video streams are related to the particular event the user is currently watching. This first selection step 30 allows automatically selecting relevant video streams among a huge number of available real-time video streams $2_j$, $2_k$.

In a preferred embodiment, data 24 describing the particular event the user is currently watching is transmitted to the selecting means 17 via the communication network 4. According to this embodiment, the selection made in the step 30 is carried out based on the received data 24 describing the particular event and on the data describing the available real-time video streams $2_j$, $2_k$. This allows ensuring that the available real-time video streams $2_j$, $2_k$, particularly the user-generated video streams $2_k$, are effectively related to the particular event.

More precisely, in a particular embodiment, the first step 30 comprises a substep during which, for each of the available real-time video streams $2_j$, $2_k$, one compares keywords extracted from the received data 24 describing the particular event to keywords extracted from the received data describing the available real-time video stream. This comparison is for example performed thanks to a known similarity measure, such as for example a cosine similarity measure. According to this example, if the result of the similarity measure for a given real-time video stream $2_j$, $2_k$ exceeds a predefined threshold, the video stream is considered as relevant for the event and is pre-selected in the set 18 of relevant video streams.

Preferably, the first step 30 comprises another substep during which, for each of the available real-time video streams $2_j$, $2_k$, one checks the available real-time video stream against predetermined quality rules. Such rules may be a combination of service provider rules and end user rules. Such rules may include for example criteria of basic video criteria such as video resolution, encoding, and the like. In a particular embodiment, stream quality is assessed during this substep using low-level video analysis features, such as motion vectors to asses the dynamism of a video scene, for example. In another particular embodiment, or in addition to the previous embodiment, stream quality is assessed using trust information provided by the sources 6A, 6B, 8. For example, video streams from video television channels and/or highly commented video streams are preferred over user-generated video streams and/or low commented video streams for a same level of quality and similarities. The output of this substep of quality check is the set 18 of relevant video streams.

After or in parallel of this first step 30 the stream-relating social analyzing means 20 receive the social interaction data $10_i$ from the source 8 via the communication network 4. In a following step 32, the analyzing means 20 determine an ordered subset 34 of relevant video streams from the received set 18 of relevant video streams. This determination is carried out based on the received social interaction data $10_i$, and more precisely based on the social interaction data associated to each of the relevant video streams selected during the step 30.

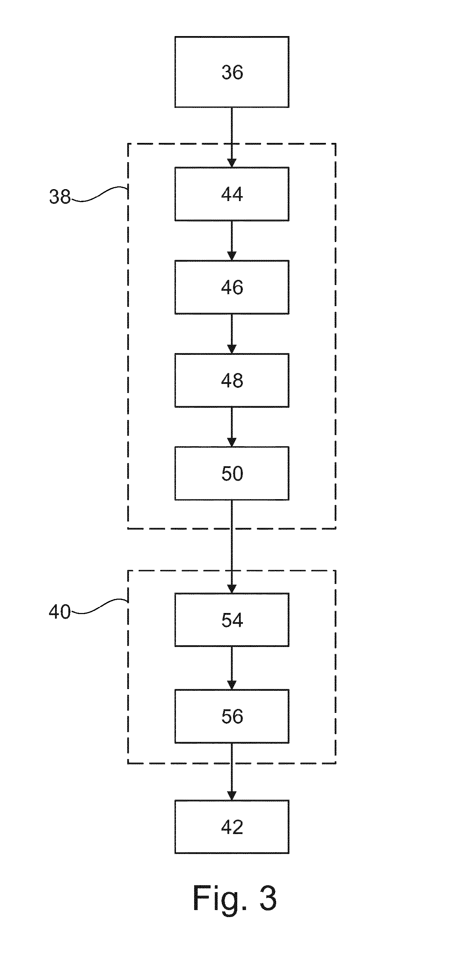

In a particular embodiment, the determination step 32 comprises a first substep during which one computes a time interval value, and a second substep during which one computes a time window value. The time window value is less than or equal to the time interval value. According to this embodiment, as illustrated in Figure 3, the determination step 32 further comprises for each time interval:

- a substep 36 of cutting each received relevant video stream into several video stream segments,
- for each of the video stream segments, a substep 38 of determining a set of topics,
- a substep 40 of determining a level of content similarity between the video stream segments and the particular video stream currently watched by the user, and
- a substep 42 of classifying the video stream segments according to their level of content similarity with the particular video stream currently watched by the user.

Each video stream segment determined during the substep 36 has a duration equal to the time window value. In the following, for each received relevant video stream, we consider a video segment $S_v$ which length is equal to the time window value and that immediately precedes the next time interval.

The topics determined for each of the video stream segments $S_v$ during the substep 38 are related to the social interaction data associated to said video stream segment $S_v$. For example, the topics determined for each of the video stream segments $S_v$ during the substep 38 are the results of a form of clustering of the social interaction data associated to said video stream segment $S_v$, as described in further detail below.

Preferably, the substep 38 of determining a set of topics for each of the video stream segments $S_v$ comprises:

- an extraction 44 of keywords K from the social interaction data associated to the corresponding video stream segment $S_v$,
- for each extracted keyword K, a computation 46 of a weight W,
- an association 48 of each computed weight W to its corresponding keyword K, and
- an implementation 50 of a predetermined topic model algorithm on the extracted keywords K and on their respective weights W.

In a preferred embodiment, the extraction 44 of keywords K is carried out using a known POS (Part Of Speech) tagging algorithm. This allows not only to extract keywords from each social interaction data but also to classify them into nouns, verbs, adjectives, etc. In a particular embodiment, one keeps as keywords K only nouns, which are known to express the most neutral information. In another embodiment, or in addition to the previous embodiment, a known stemming algorithm is advantageously applied on the social interaction data.

This allows to group together words sharing a same prefix, such as a noun and its related verb for example.

In an embodiment, for each extracted keyword K, two parameters $t_f$, $I_{cf}$ are computed beforehand so as to enable the computation 46 of the corresponding weight W. A first parameter $t_f$ is the frequency of apparition of the keyword K in the corresponding social interaction data. A second parameter $I_{cf}$ is computed by the following formula :

$$I_{cf} = \log\left(\frac{C_{i,Sv}}{\left|\{c_i : K_j \in c_i\}\right|}\right) \quad (1)$$

where $C_{i,Sv}$ is the number of social interaction data associated to the video segment $S_v$, and $\left|\{c_i : K_j \in c_i\}\right|$ is the number of social interaction data associated to the video segment $S_v$ that contain the keyword $K_j$. The second parameter $I_{cf}$ allows making the less commented video segments as discriminative as the most commented video segments. Indeed, the volume of comments for a given video segment, i.e. the volume of social interaction data associated to this video segment, is not per se an indicator of the importance of this video segment. For example, a few people may have seen and commented something very interesting in a given video segment.

For each extracted keyword K, the corresponding weight W is then given by the following formula :

$$W = t_f \times I_{cf} \quad (2)$$

In an embodiment, the association 48 of each computed weight W to its corresponding keyword K consists in forming N1 couples, each couple comprising a keyword K and its corresponding weight W.

In a preferred embodiment, the predetermined topic model algorithm that is implemented on the extracted keywords K and on their respective weights W during phase 50 is for example a LDA (Latent Dirichlet Allocation) algorithm. More precisely, the LDA algorithm is applied on a vector formed by the union of the N1 couples determined during the previous phase. As is known, the input of such a LDA algorithm is a predetermined number of topics. This predetermined number of topics may be empirically determined. For example, this number may be a multiple of the number of video streams, assuming that a few themes can be discussed on each video stream. The output of such a LDA algorithm is a description of topics according to a distribution of probabilities over keywords K. In the following, we consider that $D_w$ represents the time window value. Each topic $T_{Dw,j}$ is given by the formula:

$$T_{Dw,j} = \sum_{i=1}^{N} \alpha_{ji} K_i \qquad (3)$$

where $\alpha_{ji}$ is a probability term inferred by the LDA algorithm. The description of topics $T_{Dw,j}$ depends on the time window value $D_w$. Thus, the description of topics $T_{Dw,j}$ depends on the duration of the video segments and is in general different for two consecutive video segments as it depends on the evolution of social interaction data over time.

The LDA algorithm is particularly suitable in case of a huge amount of data, which is the case in the present invention. The use of the LDA algorithm allows providing a distribution of topics in a limited time.

Alternatively, other topic model algorithms providing a semantic description of each of the video stream segments $S_v$ may be used during the phase 50.

Preferably, the substep 40 of determining a level of content similarity between the video stream segments $S_v$ and the particular video stream currently watched by the user comprises:

- a classification 54 of the video stream segments $S_v$ into a distribution $\Omega$ of probabilities overs the set of topics $T_{Dw,j}$ determined during substep 38, and
- a computation 56 of a similarity metric on the distribution $\Omega$ of probabilities and on the particular video stream currently watched by the user.

In an embodiment, the distribution $\Omega$ is determined via the implementation of a known statistical model and is given by the formula:

$$\Omega(S_v) = \sum_{j=1}^{m} \beta_j T_{Dw,j} \qquad (4)$$

where $\beta_j$ is a probability term inferred by the statistical model. This embodiment allows characterizing in particular the video stream currently watched by the user.

In an exemplary embodiment, the similarity metric computed on the distribution $\Omega$ of probabilities and on the particular video stream currently watched by the user during phase 56 is a cosine similarity metric.

The video stream segments classified as a list during the substep 42 form the ordered subset 34 of relevant video streams.

The method preferably further comprises a step of computation, for each of the video stream segments $S_v$, of a pattern of evolution of the social interaction data associated to this video stream segment $S_v$ during the duration of the video segment. Preferably, each pattern of evolution is determined via a comparison between a representative function of the number of social interaction data associated to a given video stream segment over time, and predetermined evolution patterns.

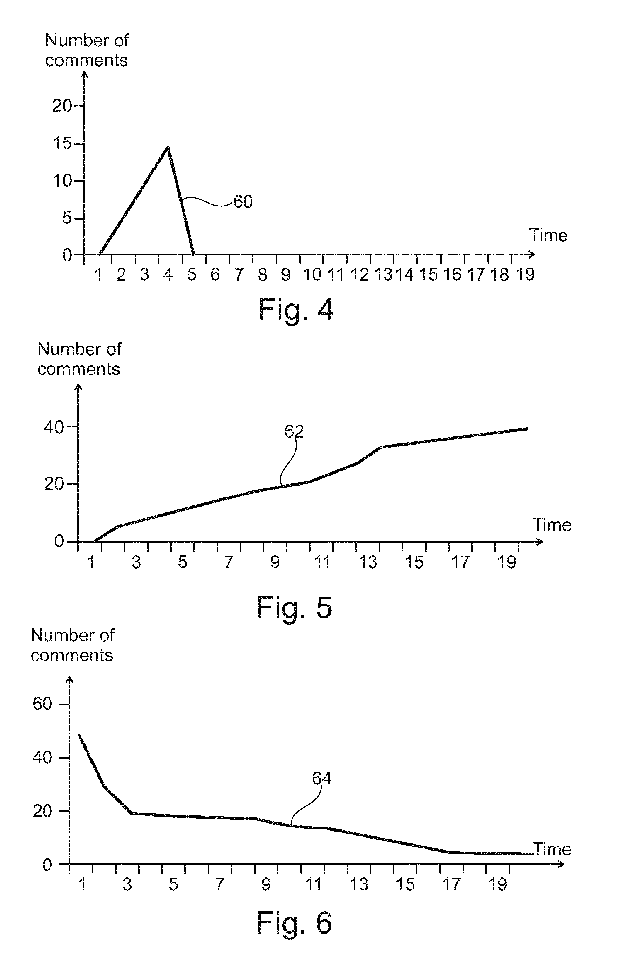

Such predetermined evolution patterns are for example illustrated on Figures 4 to 6. On Figure 4, the curve 60 represents a number of social interaction data associated to a given video stream segment over time. This curve 60 represents a first pattern with a peek in the number of social interaction data. Indeed, the number of social interaction data increase suddenly over time. This is an indicator of a small but important event in the video stream segment.

On Figure 5, the curve 62 represents a number of social interaction data associated to a given video stream segment over time. This curve 62 represents a second pattern with an almost constant increase in the number of social interaction data. This is an indicator of a growing interest in the video stream segment, with a high probability that the topics will substantially remain the same in the next video stream segment.

On Figure 6, the curve 64 represents a number of social interaction data associated to a given video stream segment over time. This curve 64 represents a third pattern with an almost constant decrease in the number of social interaction data. This is an indicator that the beginning of the video stream segment may have been interesting, but that the topics are likely to change in the next video stream segment.

For each video stream segment $S_v$, a representative function of the number of social interaction data associated to the video stream segment over time is determined, and then compared with the three above-mentioned patterns so as to identify the most similar pattern.

Returning to Figure 2, the method comprises a further step 68 during which the final selecting means 22 select a single relevant video stream from the received subset 34 of relevant video streams.

Preferably, the final selection step 68 comprises a subset of emitting a recommendation signal of switching to the selected relevant video stream. The recommendation is advantageously based on a pre-selection of video streams among the received subset 34 of relevant video streams, and on an implementation of a decision matrix.

In an embodiment, the pre-selection of video streams depends on a predetermined user parameter as to content similarity. This parameter is a user input, set for example by the user in the preferences of the system 12. This parameter is for example set so as to favor similar video contents. Alternatively, this parameter is set so as to favor dissimilar video contents. Depending on this parameter, the final selecting means 22 pre-selects a predetermined number N2 of video segments among the ordered subset 34 of relevant video streams. For example, if the parameter is set so as to favor similar video contents, the final selecting means 22 pre-selects the N2 video segments at the beginning of the ordered list 34 of video segments. Alternatively, if the parameter is set so as to favor dissimilar video contents, the final selecting means 22 pre-selects the N2 video segments at the end of the ordered list 34 of video segments.

Preferably, according to the previous embodiment, the decision matrix has as inputs the predetermined user parameter as to content similarity and the result of the computation, for each of the N2 preselected video stream segments $S_v$, of a pattern of evolution of the social interaction data. According to the embodiments described above, the user parameter is likely to have two different values and the computation of video stream segment patterns defines a discrete matrix with three states. Each state of the discrete matrix corresponds to one of the first, second and third patterns illustrated on Figures 4 to 6. Besides, the decision matrix has at least two final outputs, one of said decision outputs corresponding to the emission of the recommendation signal of switching to one video stream among the N2 preselected video streams.

In a particular embodiment, the decision matrix has three final outputs and takes for example the following form (without this matrix being exhaustive of all the possible comparisons):

| User parameter | S | S | * | D | D |
|----------------|---|---|---|---|---|
| Pattern # | 1 | 3 | 2 | 1 | 3 |
| Ouput | N | N | Y | R | R |

In the above decision matrix which is implemented on each of the N2 preselected video stream segments $S_v$:

- the sign " S " represents a user parameter set so as to favor similar video contents ,
- the sign " D " represents a user parameter set so as to favor dissimilar video contents,
- the sign " * " indicates that the corresponding value has no influence,
- the sign " 1 " represents the first pattern 60 illustrated on Figure 4,
- the sign " 2 " represents the second pattern 62 illustrated on Figure 5,
- the sign " 3 " represents the third pattern 64 illustrated on Figure 6,
- the sign "N" indicates that the considered video stream segment is discarded,
- the sign "Y" indicates that the considered video stream segment is selected and that the final selecting means 17 emit the recommendation signal of switching to this video stream, and
- the sign "R" indicates that the considered video stream segment is selected and that the final selecting means 17 emit a recommendation signal of switching to an instant replay of this video stream.

Thus, in this particular embodiment, the last two columns of the matrix decision correspond to the emission of a recommendation signal of switching to an instant replay of this video stream. This allows a user who has just missed an important part of the event that occurred while he was watching the current stream to switch to a kind of timeshift mode. In this timeshift mode, the video stream that broadcasted said part of the event is advantageously replayed for the user.

The decision matrix provides outputs for the N2 preselected video streams for each time interval. Depending on these outputs, at each time interval, a particular video stream is selected or not and the corresponding recommendation signal is emitted or not.

In a particular embodiment, after this final selection step 68, the final selecting means 17 transmit to the display device 14 the recommendation signal of switching to the selected relevant video stream, thanks to the communication network 4. The display device 14 then displays this recommendation to the user, using for examples techniques such as a clickable PIP (Picture In Picture), with a specific clear indicator when it is about not only switching but rewinding to the last video stream segment. Alternatively, the display device 14 automatically switches from the current displayed video stream to the selected relevant video stream. The option of either displaying a recommendation or switching automatically is user-selectable in the system.

The method offers several advantages:

- for the user, it allows providing a deeper sense of immersion within the event by the possibility of switching intelligently between the different video streams, while avoiding unmanageable plethora of video streams and enabling immediate replay of some important just missed parts of the event,
- for the multimedia content producers, it allows increasing simplicity for users to interact with multistream events, as well as audience engagement (through personalized video composition and usefulness of social interaction data) and multimedia event attractiveness for advertisers.

A person skilled in the art would readily recognize that steps of the various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any routers shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

**Claims**

1. Method for automatically selecting a real-time video stream among a plurality of available real-time video streams ($2_j$, $2_k$), the method comprising:

    • a first step (30) of selection of a set (18) of relevant video streams from an initial set of available real-time video streams ($2_j$, $2_k$), said rele-

vant video streams being related to a single event,
    • a step (32) of determination of an ordered subset (34) of relevant video streams from the received set (18) of relevant video streams, said determination being based on a received set of social interaction data ($10_i$) associated to each of said relevant video streams, and
    • a second step (68) of selection of a single relevant video stream from the received subset (34) of relevant video streams.

2. Method according to claim 1, wherein the first selection is carried out based on received data (24) describing the single event and on received data describing the available real-time video streams ($2_j$, $2_k$), the first selection step (30) comprising, for each of the available real-time video streams ($2_j$, $2_k$), a comparison between keywords extracted from said received data describing the single event and keywords extracted from the received data describing said available real-time video stream.

3. Method according to claim 1 or 2, wherein the first selection step (30) comprises, for each of the available real-time video streams ($2_j$, $2_k$), a check of said available real-time video stream ($2_j$, $2_k$) against predetermined quality rules.

4. Method according to any of the preceding claims, wherein the determination step (32) comprises:

    • a computation of a time interval value,
    • a computation of a time window value, said time window value being less than or equal to the time interval value,
    • and for each time interval :

        ○ a cutting (36) of each received relevant video stream into a plurality of video stream segments, each video stream segment having a duration equal to the time window value,
        ○ for each of the video stream segments, a determination (38) of a set of topics, said topics being related to the social interaction data associated to said video stream segment,
        ○ a determination (40) of a level of content similarity between said video stream segments and a current broadcast video stream,
        ○ a classification (42) of said video stream segments according to their level of content similarity with the current broadcast video stream, said classified video stream segments forming the ordered subset (34) of relevant video streams.

**5.** Method according to claim 4, wherein the determination (38) of a set of topics for each of the video stream segments comprises:

• an extraction (44) of keywords from the social interaction data associated to the corresponding video stream segment,
• for each extracted keyword, a computation (46) of a weight,
• an association (48) of each computed weight to its corresponding keyword, and
• an implementation (50) of a predetermined topic model algorithm on said extracted keywords and on their respective weights.

**6.** Method according to claim 4 or 5, wherein the determination (40) of a level of content similarity between the video stream segments and a current broadcast video stream comprises:

• a classification (54) of the video stream segments into a distribution of probabilities over said sets of topics, and
• a computation (56) of a similarity metric on said distribution of probabilities and on the current broadcast video stream.

**7.** Method according to any of claims 4 to 6, wherein the method further comprises a step of computation, for each of the video stream segments, of a pattern of evolution of the social interaction data associated to said video stream segment, said pattern of evolution being determined via a comparison between a representative function of the number of social interaction data associated to said relevant video stream segment over time, and predetermined evolution patterns (60, 62, 64).

**8.** Method according to claim 7, wherein the second selection step (68) comprises an emission of a recommendation signal of switching to a real-time video stream, said recommendation being based on:

• a pre-selection of video streams among the received subset (34) of relevant video streams, said pre-selection depending on a predetermined user parameter as to content similarity, and
• an implementation of a decision matrix, said decision matrix having as inputs said predetermined user parameter as to content similarity and the result of said computation of video stream segment patterns, said decision matrix having at least two final decision outputs, one of said decision outputs corresponding to the emission of the recommendation signal of switching to one video stream among said preselected relevant video streams, said recommended video stream then forming the selected video stream.

**9.** Method according to claim 8, wherein the decision matrix has three final decision outputs, another of said decision outputs corresponding to the emission of a recommendation signal of switching to an instant replay of one video stream among said pre-selected relevant video streams, said video stream then forming the selected video stream.

**10.** Method according to any of the preceding claims, wherein the real-time video streams $(2_j, 2_k)$ are either video streams $(2_j)$ provided by video television channels or are user-generated video streams $(2_k)$.

**11.** Computer program product comprising a set of instructions arranged, when it is executed by processing means, for performing the method according to one of the preceding claims to allow selecting automatically a real-time video stream among a plurality of available real-time video streams $(2_j, 2_k)$.

**12.** Method for performing a communication protocol comprising a submethod for automatically selecting a real-time video stream among a plurality of available real-time video streams $(2_j, 2_k)$ according to any of claims 1 to 10, said method further comprises at least one step among:

• a step of receiving a plurality of available real-time video streams $(2_j, 2_k)$ from at least one source (6A, 6B) providing real-time video streams,
• a step of receiving social interaction data $(10_i)$ from at least one source (8) providing social interaction data $(10_i)$ associated to real-time video streams $(2_j, 2_k)$,
• a step of transmitting to a display device (14) a recommendation signal of switching to the selected relevant video stream.

**13.** System (12) for automatically selecting a real-time video stream among a plurality of available real-time video streams $(2_j, 2_k)$, the system (12) comprising:

• means (17) for selecting a set (18) of relevant video streams among a set of available real-time video streams $(2_j, 2_k)$, said relevant video streams being related to a single event,
• stream-relating social analysing means (20) connected to the selecting means (17), said analysing means (20) being adapted to receive a set of social interaction data $(10_i)$ associated to each of said relevant video streams, and being arranged, when it receives said set (18) of relevant video streams, for determining an ordered subset (34) of relevant video streams based on said set of social interaction data $(10_i)$,

• final selecting means (22) connected to the analysing means (20), said final selecting means (22) being adapted to select a single relevant video stream from the received subset (34) of relevant video streams.

Fig. 1

EP 2 902 924 A1

24

10i

2j

-2$_1$-
-2$_2$-
-2$_n$-

2k

-2$_1$-
-2$_m$-

12

-17-

-18-

-20-

-34-

-22-

30

32

68

Fig. 2

Fig. 3

Number of comments

20 —
15 —
10 —
5 —
0 —

— 60

Time

1 2 3 4 5 6 7 8 9 10 11 12 13 14 15 16 17 18 19

## Fig. 4

Number of comments

40 —

20 —

0 —

62

Time

1 3 5 7 9 11 13 15 17 19

## Fig. 5

Number of comments

60 —
40 —
20 —
0 —

64

Time

1 3 5 7 9 11 13 15 17 19

## Fig. 6

Europäisches
Patentamt

European
Patent Office

Office européen
des brevets

## EUROPEAN SEARCH REPORT

Application Number

EP 14 15 3338

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/009101 A1 (BLUEFIN LAB INC [US]; FLEISCHMAN MICHAEL BEN [US]; ROY DEB KUMAR [US]) 20 January 2011 (2011-01-20)<br>* abstract; figure 3 *<br>* paragraph [0004] *<br>* paragraphs [0034], [0045], [0049]; figure 2 *<br>* paragraph [0074] * | 1-13 | INV.<br>G06F17/30 |
| X | US 2013/086159 A1 (GHARACHORLOO NADER [US] ET AL) 4 April 2013 (2013-04-04)<br>* abstract; figure 3 *<br>* paragraph [0016]; figure 1 *<br>* paragraph [0029] - paragraph [0031]; figure 2 * | 1,11-13 | |
| X | US 2012/117594 A1 (LEE BONG HO [KR] ET AL) 10 May 2012 (2012-05-10)<br>* abstract; figure 7 *<br>* paragraph [0063] - paragraph [0069]; figure 8 * | 1,11-13 | |
| A | EP 2 251 799 A1 (SAMSUNG ELECTRONICS CO LTD [KR]) 17 November 2010 (2010-11-17)<br>* abstract; figure 1 * | 3 | TECHNICAL FIELDS SEARCHED (IPC)<br><br>G06F |
| A | WO 03/041414 A1 (KONINKL PHILIPS ELECTRONICS NV [NL]) 15 May 2003 (2003-05-15)<br>* page 2, line 8 - line 27 * | 4 | |

The present search report has been drawn up for all claims

| Place of search | Date of completion of the search | Examiner |
|---|---|---|
| Munich | 6 June 2014 | Deane, Inigo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 15 3338

This annex lists the patent family members relating to the patent documents cited in the above-mentioned European search report.
The members are as contained in the European Patent Office EDP file on
The European Patent Office is in no way liable for these particulars which are merely given for the purpose of information.

06-06-2014

| Patent document cited in search report | | Publication date | Patent family member(s) | | Publication date |
|---|---|---|---|---|---|
| WO 2011009101 | A1 | 20-01-2011 | CA | 2771379 A1 | 20-01-2011 |
| | | | EP | 2454712 A1 | 23-05-2012 |
| | | | JP | 2012533803 A | 27-12-2012 |
| | | | KR | 20120088650 A | 08-08-2012 |
| | | | US | 2011040760 A1 | 17-02-2011 |
| | | | US | 2011041080 A1 | 17-02-2011 |
| | | | US | 2013086489 A1 | 04-04-2013 |
| | | | WO | 2011009101 A1 | 20-01-2011 |
| US 2013086159 | A1 | 04-04-2013 | NONE | | |
| US 2012117594 | A1 | 10-05-2012 | NONE | | |
| EP 2251799 | A1 | 17-11-2010 | EP | 2251799 A1 | 17-11-2010 |
| | | | JP | 2010268447 A | 25-11-2010 |
| | | | KR | 20100123059 A | 24-11-2010 |
| | | | US | 2010293578 A1 | 18-11-2010 |
| WO 03041414 | A1 | 15-05-2003 | US | 2003105794 A1 | 05-06-2003 |
| | | | WO | 03041414 A1 | 15-05-2003 |

EPO FORM P0459

For more details about this annex : see Official Journal of the European Patent Office, No. 12/82